# FASCICULE DE BREVET EUROPEEN

(11) **EP 2 117 932 B1**
(45) Date de publication et mention de la délivrance du brevet: **14.03.2012**
(21) Numéro de dépôt: 07870326.1
(22) Date de dépôt: 23.11.2007
(51) Int. Cl.: B64D 29/08

(54) **NACELLE DE MOTEUR A REACTION POUR UN AVION**
GONDEL FÜR EIN FLUGZEUGTRIEBWERK
NACELLE FOR THE JET ENGINE OF AN AIRCRAFT

(30) Priorité: 14.02.2007 FR 0701059
(43) Date de publication de la demande: 18.11.2009
(73) Titulaire: Aircelle, 76700 Gonfreville l'Orcher (FR)
(72) Inventeur: VAUCHEL, Guy, Bernard, F-76600 Le Havre (FR); HILLEREAU, Nicolas, F-76600 Le Havre (FR); COLLIER, Jérôme, F-76600 Le Havre (FR); CHOUARD, Pierre-Alain, F-75018 Paris (FR); LEFORT, Guillaume, F-75012 Paris (FR)
(74) Mandataire: Gaillarde, Frédéric F. Ch.
(86) Numéro de dépôt international: PCT/FR2007/001923
(87) Numéro de publication internationale: WO 2008/102068

(56) Documents cités:
- EP-A1- 0 155 887
- EP-A1- 0 361 901
- EP-A1- 0 361 901
- EP-A1- 0 391 795
- FR-A1- 2 622 930
- FR-A1- 2 757 823
- GB-A- 2 274 490

## Description

L'invention concerne une nacelle de turboréacteur pour un avion, du type comportant une structure aval comprenant une structure externe qui définit, avec une structure interne concentrique destinée à entourer une partie aval du turboréacteur, un canal annulaire d'écoulement, canal également appelé veine.

Un avion est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine.

Une nacelle pour un tel moteur présente généralement une structure externe, dite Outer Fixed Structure (OFS), qui définit, avec une structure interne concentrique, dite Inner Fixed Structure (IFS), entourant la structure du moteur proprement dite en arrière de la soufflante, la veine destinée à canaliser le flux d'air froid qui circule à l'extérieur du moteur. Les flux primaire et secondaire sont éjectés du moteur par l'arrière de la nacelle.

Chaque ensemble propulsif de l'avion est ainsi formé par une nacelle et un moteur, et est suspendu à une structure fixe de l'avion, par exemple sous une aile ou sur le fuselage, par l'intermédiaire d'un pylône ou mât rattaché au moteur ou à la nacelle.

La structure interne de la nacelle est usuellement formée de deux demi-coquilles de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au moteur.

Selon l'état de la technique, les deux demi-coquilles sont généralement montées pivotantes autour d'un axe longitudinal formant charnière en partie supérieure (à 12 heures) de l'inverseur. Les demi-coquilles sont maintenues en position de fermeture au moyen de verrous disposés le long d'une ligne de jonction en partie inférieure (à 6heures).

Pour ce faire, Il est nécessaire d'ouvrir la structure externe pour pouvoir ouvrir les demi-coquilles. Les structures externe et interne sont liées et maintenues ouvertes par un système de vérins et de bielles.

Selon certains modes de réalisation, chaque demi-coquille de la structure interne est reliée solidairement à la demi-coquille correspondante de la structure externe par l'intermédiaire d'un îlot de liaison de manière à pouvoir être ouverte simultanément avec la structure externe. Un tel mode de réalisation est avantageux en ce qu'il ne nécessite qu'une seule ligne charnière pour la structure externe.

Le document EP O 361 901 décrit une telle nacelle dont la section aval entourant la chambre de combustion du turboréacteur s'ouvre par pivotement, tant pour la structure externe que pour la structure interne. Un léger coulissement d'une partie terminale de tuyère permet de dégager les capots de la section aval avant leur ouverture.

Les opérations d'ouverture en position de maintenance sont laborieuses car elles nécessitent de soulever les demi-coquilles, et celles-ci peuvent alors constituer un obstacle dangereux pour le personnel.

La présente invention vise à éviter ces inconvénients et consiste en une nacelle telle que définie dans le texte de la revendication indépendante.

Ainsi, en prévoyant une structure interne mobile en translation selon une direction longitudinale de la nacelle, ladite structure interne ne doit plus être ouverte latéralement lors d'un accès au turboréacteur mais simplement en la faisant translater. De ce fait, l'invention permet de diminuer la masse devant être soulevée, éventuellement en même temps que les parties de la structure externe, et permet de simplifier les opérations d'ouverture ainsi que les moyens nécessaires pour cette mise en oeuvre. On notera plus particulièrement l'allègement des bielles de soutènement, la suppression de toute ligne charnière interne et l'allègement de la ligne charnière externe.

Il s'ensuit également une sécurité accrue lors des opérations de maintenance. Par ailleurs, on notera que la translation de la structure interne peut éventuellement être effectuée sans ouvrir totalement la structure externe, une trappe réduite pouvant être simplement prévue dans celle-ci.

Préférentiellement, la structure interne est réalisée sous la forme d'au moins deux demi-parties.

Préférentiellement encore, les demi-parties sont situées de part et d'autre d'un plan de symétrie longitudinal de la nacelle.

Avantageusement, la structure interne comporte au moins un dispositif de verrouillage en position de travail.

Avantageusement encore, ledit dispositif de verrouillage est activable par l'entremise d'un câble flexible d'actionnement disposé d'aval en amont de la demi-coquille.

De manière préférentielle, la structure externe est apte à s'ouvrir en translation, la structure interne étant rattachée à la structure externe par l'intermédiaire d'au moins une bielle d'entraînement.

Avantageusement, la structure interne est apte à se déplacer en translation par rapport à la nacelle au moyen d'au moins un système rail/glissière.

En variante ou de manière complémentaire, la structure interne présente au moins une partie fixe de carénage fixée en amont au turboréacteur, éventuellement par l'intermédiaire d'un cadre. Avantageusement, la partie fixe de carénage est fixée en aval sur des moyens de suspension du turboréacteur à un mât.

Alternativement ou de manière complémentaire, la partie fixe de carénage présente en aval des moyens de suspension au turboréacteur.

Avantageusement, ladite partie fixe de carénage présente une forme telle qu'en position de travail, elle s'inscrive sensiblement dans le contour extérieur de la structure interne.

Selon un premier mode de réalisation, la glissière est destinée à être fixée sur la partie aval du turboréacteur tandis que le rail correspondant est solidaire de la structure interne, ou inversement.

Selon un deuxième mode de réalisation, la partie fixe de carénage présente au moins un rail latéral, ou une glissière, apte à coopérer avec une glissière, ou un rail, complémentaire de la structure interne.

La présente invention se rapporte également à un turboréacteur double flux destiné à être inséré dans une nacelle telle que décrite précédemment, caractérisé en ce qu'il présente une partie aval comprenant au moins une glissière ou un rail apte à coopérer avec un rail ou une glissière solidaire d'une structure interne de la nacelle.

Avantageusement, la glissière ou le rail destiné à être fixée sur la partie aval du turboréacteur présente au moins un tronçon amont courbe apte à permettre un écartement ou un rapprochement radial de la structure interne en déplacement le long de la partie aval du turboréacteur et un tronçon aval sensiblement rectiligne, de préférence sensiblement parallèle à un plan de symétrie de la nacelle. Pour une question de stabilité de la structure interne lors de son mouvement de translation, on pourra prévoir plusieurs glissière réparties le long de la structure interne et/ou du turboréacteur et présentant chacune le même profil.

De manière préférentielle, le tronçon amont d'écartement ou de rapprochement radial est de forme parabolique.

La présente invention se rapporte enfin, à un ensemble propulsif pour aéronef, caractérisé en ce qu'il comprend, d'une part, un turboréacteur selon l'invention, et d'autre part, une nacelle selon le premier mode de réalisation de l'invention.

Bien évidemment, la présente invention concerne également un ensemble propulsif comprenant une nacelle selon l'invention et un turboréacteur selon l'art antérieur, sans glissière ou rail.

D'autres avantages et caractéristiques de l'invention ressortiront à la lecture de la description suivante réalisée à titre d'exemple et en référence aux dessins annexés dans lesquels:
- la figure 1 est une vue de profil en coupe d'une nacelle selon l'invention comportant une structure interne en position de travail.
- la figure 2 est une vue en bout, de l'avant, d'une structure interne d'une nacelle selon l'invention en position de travail;
- la figure 3 est une vue de côté de la structure interne de nacelle de la figure 2 en position de travail;
- la figure 4 est une vue schématique en coupe avant d'une partie aval d'une nacelle selon l'invention;
- la figure 5 est une vue schématique de dessus d'une glissière de guidage en coulissement d'une demi-coquille de la structure interne de nacelle précédente;
- la figure 6 est une vue analogue à la figure 2 en position de maintenance;
- la figure 7 est une vue analogue à la figure 1 en position de maintenance d'une demi-partie seulement de la structure interne.
- la figure 8 est une vue analogue à la figure 3 en position de maintenance;
- la figure 9 est une vue de côté en longueur d'une nacelle selon l'invention en position de travail;
- la figure 10 est une vue en perspective de la nacelle de la figure 9;
- la figure 11 représente cette même nacelle en perspective, vue sous un autre angle, en position de travail;
- la figure 12 est une vue analogue à la figure 9 de la nacelle en position de maintenance;
- la figure 13 est une vue analogue à la figure 10 en position de maintenance;
- la figure 14 est une vue analogue à la figure 11 en position de maintenance ;
- la figure 15 est une vue schématique en coupe de face d'une partie avale d'une nacelle selon les figures 9 à 14.

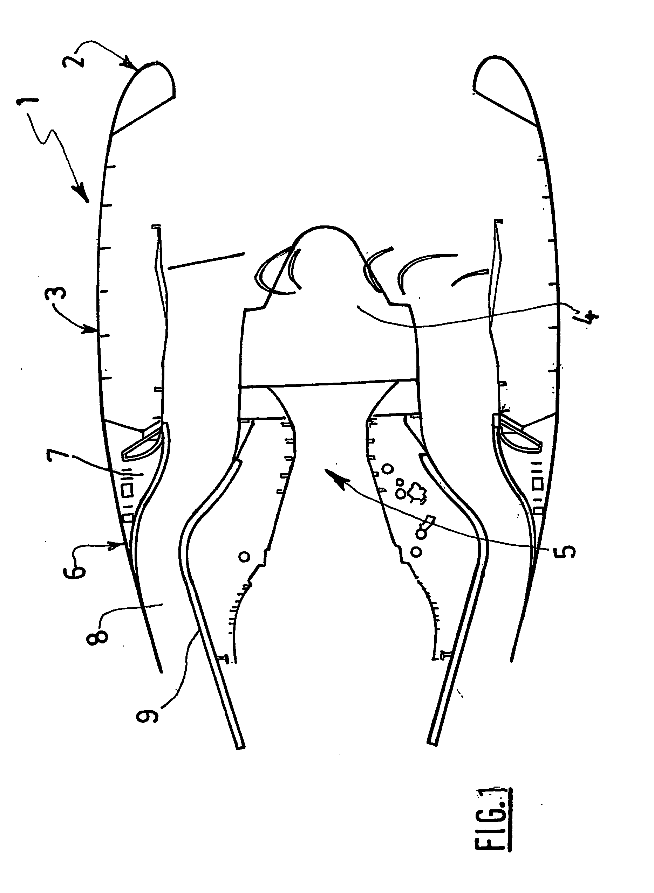

Les figures 1 à 8 présentent un premier mode de réalisation d'une nacelle selon l'invention.

Une nacelle 1, telle que montrée en coupe sur la figure 1, comprend une structure amont d'entrée d'air 2, une structure médiane 3 entourant une soufflante 4 d'un turboréacteur 5, et une structure aval comportant de manière connue en soi une structure externe 6, dite OFS, abritant des moyens d'inversion de poussée 7 et qui définit un canal annulaire 8 d'écoulement avec une structure interne 9 (IFS) concentrique entourant une partie aval du turboréacteur 5 s'étendant en arrière de la soufflante 4.

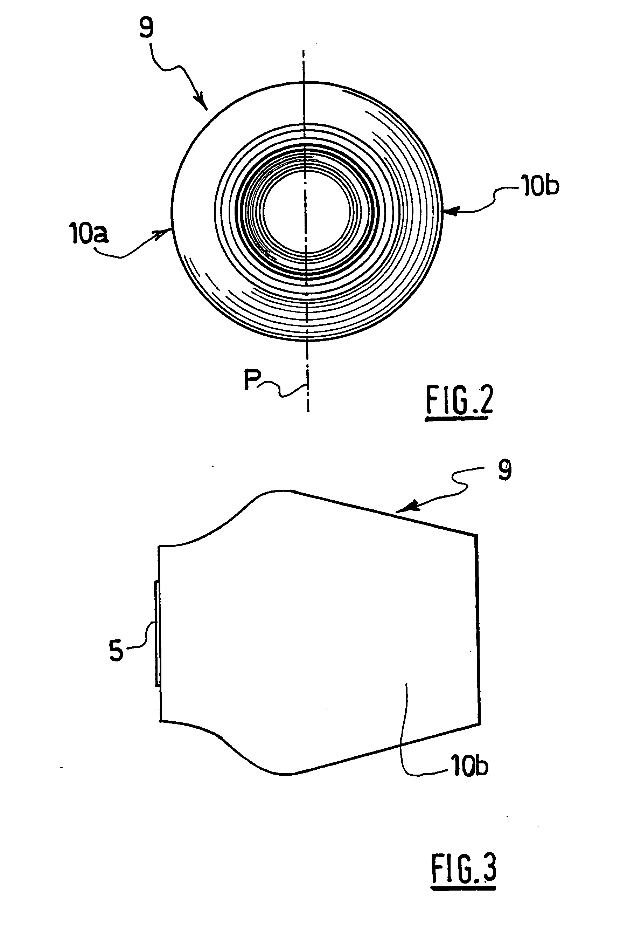

La structure interne 9 de nacelle, telle qu'illustrée plus en détail sur les figures 2 et 3 sur la figure 1, est formée de deux demi-coquilles 10a et 10b de forme sensiblement hémicylindrique, disposées de part et d'autre d'un plan vertical longitudinal P de symétrie de la nacelle.

Sur la figure 3, la structure du turboréacteur 5 est sensiblement dissimulée par les demi-coquilles 10a et 10b de la structure interne 9.

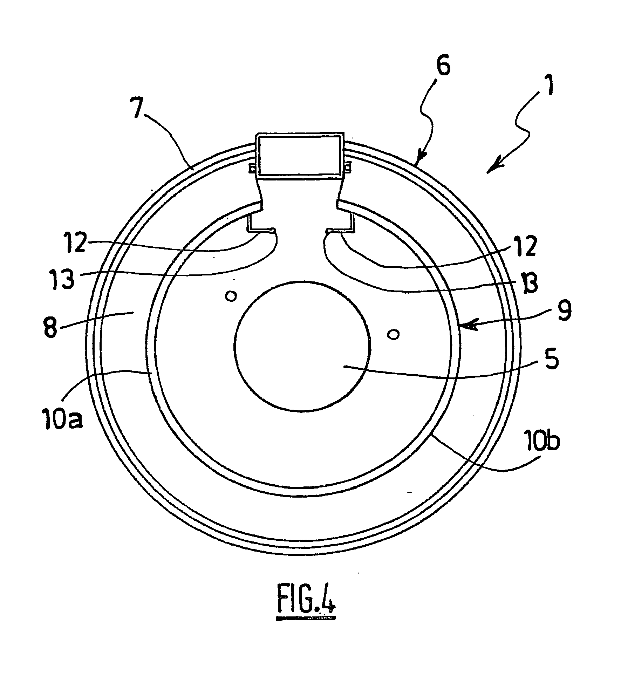

Chaque demi-coquille 10a ou 10b est rattachée à la structure externe 6 de la nacelle 1 par l'intermédiaire d'une bielle d'entraînement (non représentée), et est montée coulissante entre une position de travail et une position de maintenance par l'intermédiaire d'au moins un rail 12 apte à coopérer avec une glissière 13 (voir figure 4) qui est solidaire du turboréacteur 5. Plus précisément, chaque demi-partie présente deux rails aptes à coopérer chacun avec une glissière correspondante disposées selon un axe longitudinal de la nacelle. Bien évidemment, on pourra disposer autant de systèmes rails / glissière que nécessaire pour obtenir une bonne stabilité de la structure interne 9 lors du coulissement. Chaque glissière 13 présente un tronçon amont 13a courbe (ici parabolique) d'écartement / rapprochement radial par rapport au turboréacteur 5, et un tronçon aval 3b sensiblement rectiligne de translation axiale parallèlement au plan de symétrie P de la nacelle.

Lors de son déplacement, la structure externe 6 de nacelle tracte les demi-coquilles 10a et 10b de la structure interne par l'entremise des bielles d'entraînement.

Bien évidemment, la structure externe 6 peut conserver un système d'ouverture selon l'art antérieur par pivotement autour d'un axe charnière, la structure externe 6 n'étant alors pas liée à la structure interne 9, celle-ci pouvant être manoeuvré manuellement en utilisant par exemple le système servant au verrouillzge des demi-parties de la structure interne. La structure externe pouvant être de même déplacée vers l'aval sans entraînement par bielle de la structure interne (IFS), celui-ci pouvant être manoeuvré manuellement.

Il convient donc de noter que ce nouveau mode d'ouverture de la structure interne peut mais n'est pas obligatoirement lié à une mode d'ouverture correspondant pour la structure externe.

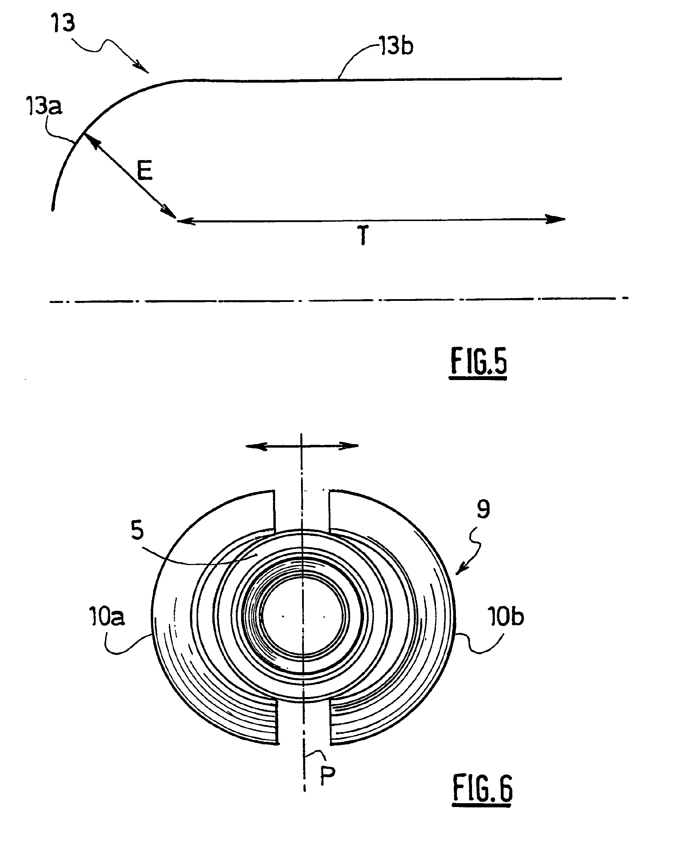

En pratique, dans une première phase E de coulissement, la demi-coquille 10a quitte la position de travail (voir figure 2) et s'écarte du plan de symétrie P de la nacelle selon une trajectoire sensiblement parabolique conformément à la forme du tronçon amont 13a de la glissière 13, jusqu'à se plaquer contre une paroi intérieure de la structure externe de nacelle (voir également la figure 5).

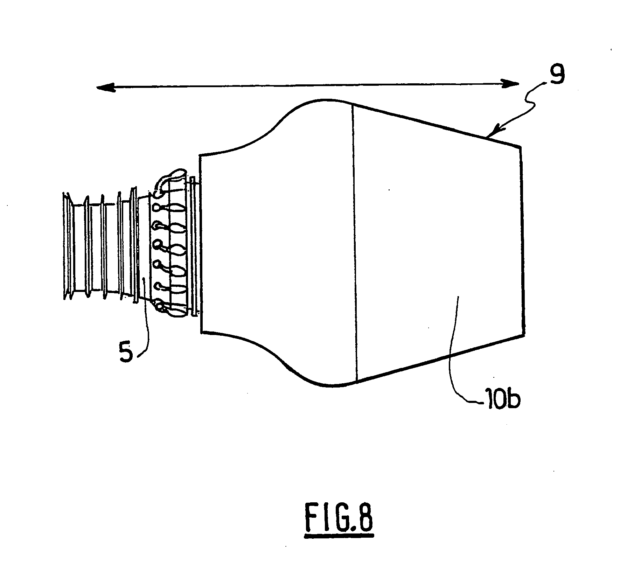

Dans une seconde phase T de coulissement de la demi-coquille 10a, celle-ci suit le tronçon aval 13b de la glissière 13 selon une trajectoire parallèle au plan de symétrie P, jusqu'à découvrir la structure du turboréacteur 5 dans la position de maintenance illustrée sur la figure 8.

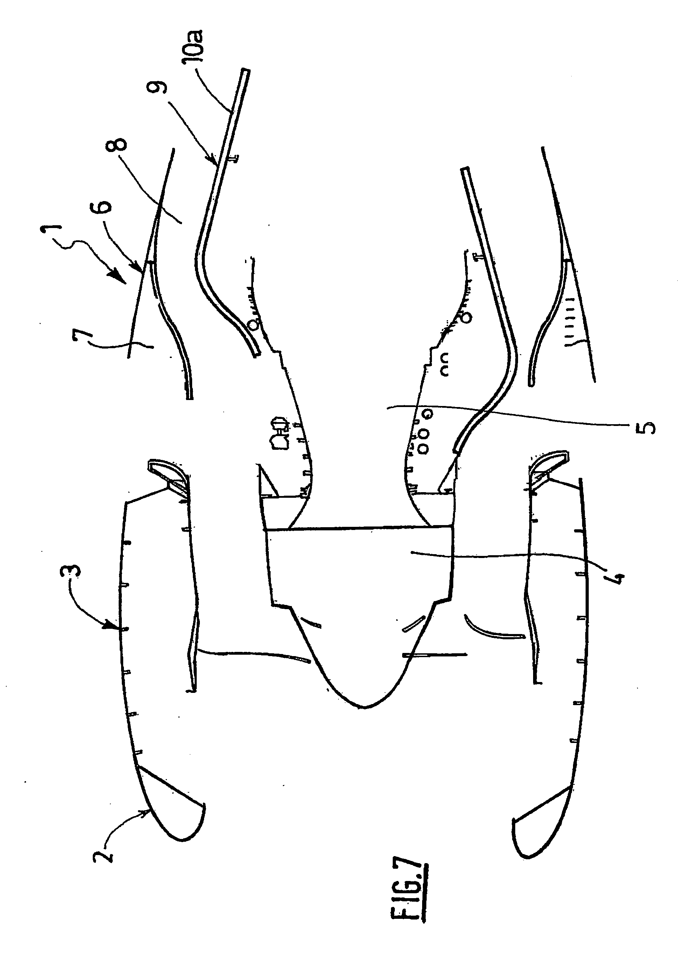

On notera que les demi-parties 10a, 10b de la structure interne 9 peuvent éventuellement être translatées indépendamment l'une de l'autre, comme cela est représenté sur la figure 7.

Par ailleurs, la présence d'un tronçon courbe d'écartement initial constitue un mode de réalisation préférentielle dépendant de la forme externe du turboréacteur 5. Si cela est possible, il est bien évidemment envisageable de prévoir une translation totalement rectiligne, le long d'une ou plusieurs glissière, sur lesquelles viennent une ou plusieurs sections de rails.

L'écartement durant la phase E peut également permettre d'éviter, lors de la phase T de translation axiale vers l'arrière, tout risque de collision entre la demi-coquille 10a et un mât (non représenté) de l'avion auquel est rattaché le turboréacteur 5.

Bien entendu, l'écartement ou le rapprochement radial des demi-coquilles 10a, 10b par rapport au turboréacteur s'accompagne, du fait de la forme du tronçon amont 3a, d'une légère translation axiale, respectivement, vers l'aval ou vers l'amont de la nacelle 1.

Le retour en position de travail des demi-coquilles 10a, 10b est, comme il va de soi, réalisé par translation axiale vers l'amont (suivant le tronçon 13b) puis par rapprochement radial vers le turboréacteur 5 (suivant le tronçon 13a).

Chaque demi-coquille 10a, 10b comporte en outre, disposés d'aval en amont, une pluralité de dispositifs de verrouillage en position de travail. Un câble flexible d'actionnement (non représenté), de type "Flexshaft", est introduit par l'arrière et déployé jusqu'à l'avant de chaque demi-coquille 10a, 10b, et permet d'actionner ces verrous. Ce système de verrouillage est accessible par l'arrière et/ou par un cadre avant de la structure externe après ouverture d'un capot de la soufflante du moteur.

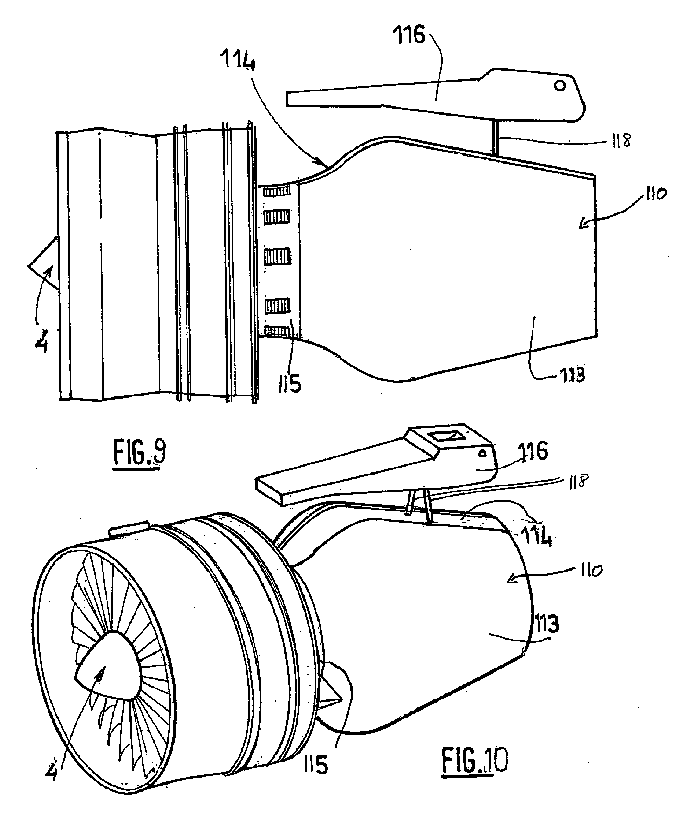

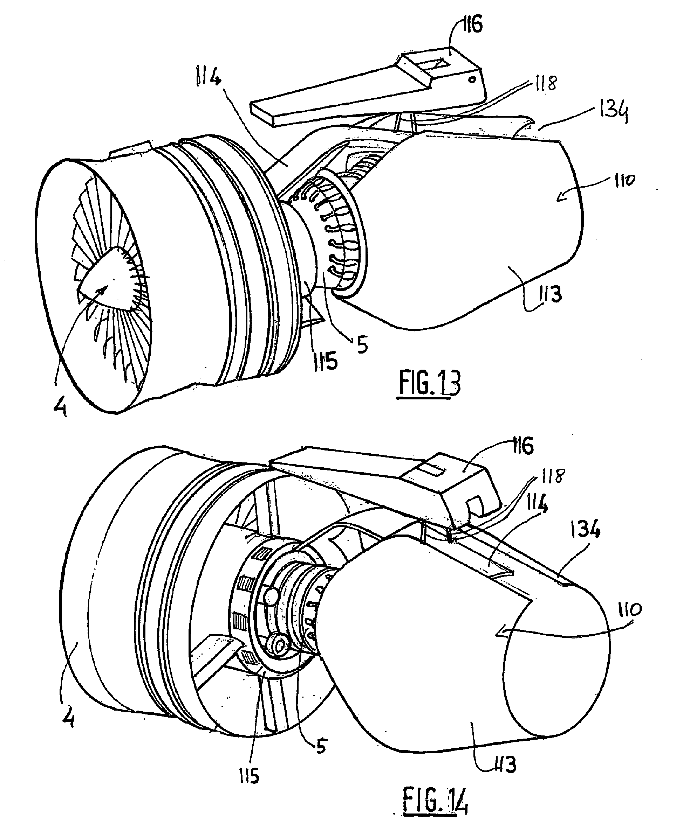

Les figures 9 à 15 présentent un deuxième mode de réalisation d'une nacelle selon l'invention comprenant une structure interne 110. Seule la structure interne 110 modifiée et le carter de la soufflante 4 de la section médiane 3 ont été représentés pour faciliter la compréhension. La structure générale de la nacelle 1 est applicable.

Il est à noter que, sur les figures 9 à 11, le turboréacteur 5 est dissimulé par la structure interne 110 de la nacelle en position de travail.

La structure interne 110 est formée d'une partie fixe de carénage 114 s'étendant longitudinalement en partie supérieure, et d'une coquille mobile 113, de forme sensiblement cylindrique, entourant le turboréacteur 5. La coquille 113 comporte une lumière 134 s'étendant longitudinalement en partie supérieure et de forme complémentaire à celle de la partie fixe de carénage 114.

La partie fixe de carénage 114 est fixée en amont (par référence au sens d'écoulement des gaz) sur un cadre 115 solidaire du turboréacteur 5 et est rattachée, en aval, au turboréacteur 5, par l'intermédiaire de bielles support 117, et supporte, par l'intermédiaire de bielles 118, un mât 116 de suspension destiné au rattachement de la nacelle sous une aile de l'avion (non représentée).

Le cadre 115 présente une structure ajourée de forme annulaire entourant concentriquement le turboréacteur 5 rattachée continûment à celui-ci au niveau d'une rainure en V intérieure de la structure du turboréacteur 5.

Bien évidemment, la structure ajourée du cadre 115 dépend de la configuration du turboréacteur et n'est pas obligatoire.

En variante, on pourra noter qu'il est possible de prévoir plusieurs parties fixes de carénage 114 et plusieurs parties mobiles 113. On pourra notamment prévoir une partie fixe de carénage 114 situé comme décrit en partie 12h et une deuxième partie fixe de carénage située de la même manière en partie 6h.

La structure annulaire du cadre 115 est protégée de la chaleur dégagée par le turboréacteur 5 par des moyens de protection (non représentés) connus en soi, et elle présente une certaine profondeur axiale pour réduire la longueur de la structure amont de la structure interne IFS afin de dégager au mieux les parties du turboréacteur devant être accessibles après recul de l'IFS.

La coquille 113 de la structure interne 110 de la nacelle est montée coulissante de part et d'autre de la partie fixe de carénage 114, par glissement des parois latérales de la lumière longitudinale 134 de la coquille 113 contre les parois latérales de la partie fixe de carénage 114, entre une position amont de travail et une position aval de maintenance.

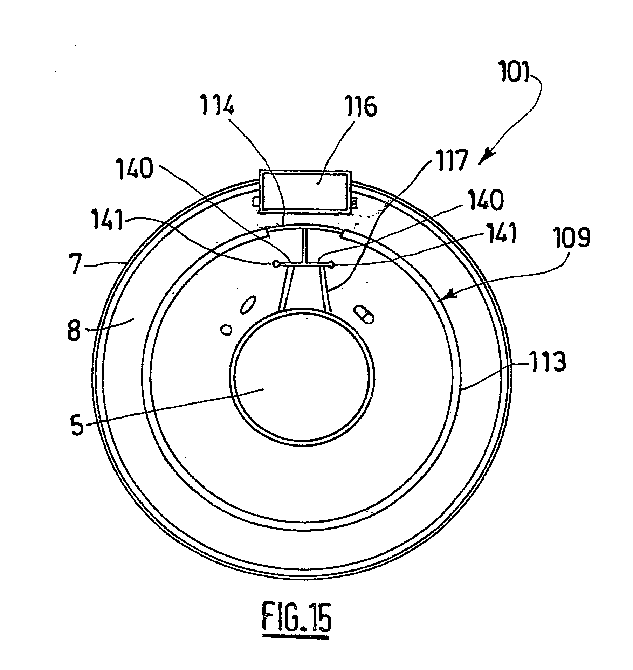

Les parois latérales de la partie fixe de carénage 114 présentent à cet effet des rails 140 (visibles figures 15) de guidage en translation axiale (longitudinale) de la coquille 113, laquelle présente des glissières 141 correspondante. La disposition inverse (rail sur la coquille 113 et glissière sur la partie fixe de carénage) est bien évidement possible.

En variante, et comme représenté sur la figure 15, les rails 140 ou glissières 141 peuvent ne pas être disposés sur les parois latérales mais selon d'autres configurations. L'essentielle étant que la partie fixe de carénage 114 supporte des moyens des guidage apte à coopérer avec des moyens de guidage complémentaires de la coquille 113 de manière à permettre un déplacement longitudinal de ladite coquille 113 le long de la partie fixe de carénage 114.

La forme de la partie fixe de carénage 114 est cambrée de telle sorte qu'elle s'inscrive, en position de travail (voir figures 9 à 11), sensiblement dans le contour extérieur de la coquille 113, en obturant la lumière longitudinale 134 de cette dernière. Il est en effet important d'assurer une continuité aérodynamique à l'intérieur du canal annulaire 8.

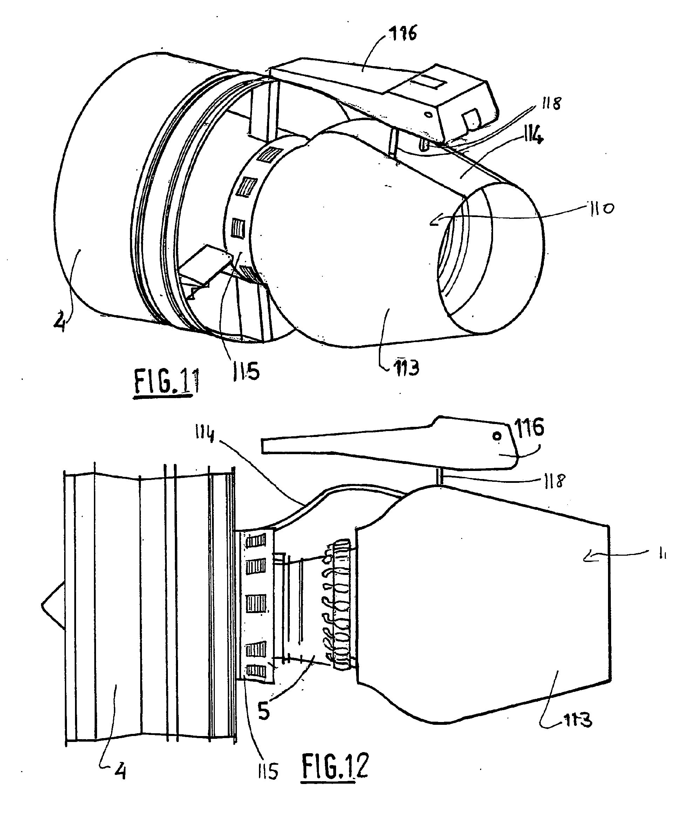

En position de maintenance illustrée sur les figures 12 à 14, la coquille 113 est déplacée vers l'aval de manière à découvrir la partie du turboréacteur à inspecter.

La coquille 113 peut également être rattachée à la structure externe OFS (non visible) par l'intermédiaire de deux bielles d'entraînement (non représentées) profilées si cette structure externe est également ouvrable par un mouvement de translation. Lors de son déplacement, la structure externe 106 de nacelle tracte ainsi la coquille 113 de structure interne 110 par l'entremise des bielles d'entraînement.

Dans sa position de maintenance ou pour un démontage de l'IFS, selon que la structure de l'IFS peut être coulissée en l'état complètement par l'aval du turboréacteur 5 sans rencontrer d'obstacle ou non, la structure interne 110 peut comporter une liaison totale ou discrète le long de la structure inférieure afin de pouvoir désolidariser chaque demi partie et permettre de les retirer indépendamment l'une de l'autre sans gêne d'élément de turboréacteur.

Plus précisément pour la maintenance, dans la position reculée, des trappes pratiquées dans la structure de l'IFS peuvent permettre un accès à certains éléments de turboréacteurs.

## Revendications

1. Nacelle (1, 101) pour turboréacteur (5), du type comportant une entrée d'air amont, une section médiane destinée à entourer une soufflante du turboréacteur et une structure aval destinée à entourer la chambre de combustion du turboréacteur, ladite section aval comprenant une structure externe (6) qui définit, avec une structure interne (9) concentrique destinée à entourer une partie aval du turboréacteur comprenant la chambre de combustion dudit turboréacteur, un canal annulaire (8) d'écoulement, **caractérisée en ce qu'**au moins une partie (10a, 10b, 110) de ladite structure interne est montée mobile en translation le long d'un axe longitudinal de la nacelle de manière à pouvoir se déplacer entre une position de travail amont et une position de maintenance où ladite partie de la structure interne est coulissée vers l'aval, pour découvrir ladite partie aval comprenant la chambre de combustion dudit turboréacteur.

2. Nacelle (1) selon la revendication 1, **caractérisée en ce que** la structure interne (9) est réalisée sous la forme d'au moins deux demi-parties (10a, 10b).

3. Nacelle (1) selon la revendication 2, **caractérisée en ce que** les demi-parties (10a, 10b) sont situées de part et d'autre d'un plan de symétrie longitudinal de la nacelle.

4. Nacelle (1) selon l'une des revendications 1 à 3, **caractérisée en ce que** chaque la structure interne (9) comporte au moins un dispositif de verrouillage en position de travail.

5. Nacelle (1) selon la revendication 4, **caractérisée en ce que** ledit dispositif de verrouillage est activable par l'entremise d'un câble flexible d'actionnement disposé d'aval en amont de la demi-coquille (10a, 10b).

6. Nacelle (1) selon l'une quelconque des revendications 1 à 5, **caractérisée en ce que** la structure externe (6) est apte à s'ouvrir en translation, la structure interne (9) étant rattachée à la structure externe par l'intermédiaire d'au moins une bielle d'entraînement.

7. Nacelle (1, 101) selon l'une quelconque des revendications 1 à 6, **caractérisée en ce que** la structure interne (9) est apte à se déplacer en translation par rapport à la nacelle au moyen d'au moins un système rail/glissière (12, 13, 140, 141).

8. Nacelle (101) selon l'une quelconque des revendications 1 à 7, **caractérisée en ce que** la structure interne (9) présente au moins une partie fixe de carénage (114) fixée en amont au turboréacteur (5).

9. Nacelle (101) selon la revendication 8, **caractérisé en ce que** la partie fixe de carénage (114) est fixée en aval sur des moyens de suspension (118) du turboréacteur (5) à un mât (116).

10. Nacelle (101) selon l'une quelconque des revendications 8 et 9, **caractérisée en ce que** ladite partie fixe de carénage (114) présente une forme telle qu'en position de travail, elle s'inscrive sensiblement dans le contour extérieur de la structure interne.

11. Nacelle (1, 101) selon l'une quelconque des revendications 7 à 10, **caractérisée en ce que** la glissière (13,141) est destinée à être fixée sur la partie aval du turboréacteur (5) tandis que le rail (12, 140) correspondant est solidaire de la structure interne (9), ou inversement.

12. Nacelle (1, 101) selon l'une quelconque des revendications 8 ou 10 **caractérisé en ce que** la partie fixe (114) de carénage présente au moins un rail latéral, ou une glissière, apte à coopérer avec une glissière, ou un rail, complémentaire de la structure interne (9).

13. Ensemble propulsif pour aéronef, **caractérisé en ce qu'**il comprend un turboréacteur (5) double flux logé dans une nacelle (1, 101) selon la revendication 7, ledit turboréacteur présentant une partie aval comprenant au moins une glissière (12, 140) ou un rail (13, 141) apte à coopérer avec un rail ou une glissière solidaire d'une structure interne de la nacelle.

14. Ensemble propulsif selon la revendication 13, **caractérisé en ce que** la glissière (12, 140) ou le rail (13, 141) destiné à être fixé sur la partie aval du turboréacteur (5) présente au moins un tronçon amont courbe apte à permettre un écartement ou un rapprochement radial de la structure interne (9) en déplacement le long de la partie aval du turboréacteur et un tronçon aval sensiblement rectiligne, de préférence sensiblement parallèle à un plan de symétrie de la nacelle (1, 101).

15. Ensemble propulsif selon la revendication 14, **caractérisé en ce que** le tronçon amont d'écartement ou de rapprochement radial est de forme parabolique.

## Claims

1. A nacelle (1, 101) for a turbojet engine (5), comprising an upstream air intake, a middle section intended to surround a fan of the turbojet engine, and a downstream structure intended to surround the combustion chamber of the turbojet engine, said downstream section comprising an outer structure (6) that defines, with a concentric inner structure (9) intended to surround a downstream portion of the turbojet engine comprising the combustion chamber of said turbojet engine, an annular flow channel (8), **characterized in that** at least part (10a, 10b, 110) of said inner structure is mounted mobile in translation along a longitudinal axis of the nacelle so as to be able to move between an upstream working position and a maintenance position in which said portion of the inner structure is slid downstream to expose said downstream portion comprising the combustion chamber of said turbojet engine.

2. The nacelle (1) according to claim 1, **characterized in that** the inner structure (9) is made in the form of at least two half-portions (10a, 10b).

3. The nacelle (1) according to claim 2, **characterized in that** the half-portions (10a, 10b) are situated on either side of a longitudinal plane of symmetry of the nacelle.

4. The nacelle (1) according to one of claims 1 to 3, **characterized in that** each the inner structure (9) comprises at least one device for locking in the working position.

5. The nacelle (1) according to claim 4, **characterized in that** said locking device can be activated through a flexible actuating cable positioned from downstream to upstream of the half-shell (10a, 10b).

6. The nacelle (1) according to any one of claims 1 to 5, **characterized in that** the outer structure (6) is capable of opening in translation, the inner structure (9) being attached to the outer structure by at least one driving connecting rod.

7. The nacelle (1, 101) according to one of claims 1 to 6, **characterized in that** the inner structure (9) is capable of moving in translation relative to the nacelle via at least one rail/guide system (12, 13, 140, 141).

8. The nacelle (101) according to any one of claims 1 to 7, **characterized in that** the inner structure (9) has at least one fixed fairing structure (114) secured upstream of the turbojet engine (5).

9. The nacelle (101) according to claim 8, **characterized in that** the fixed fairing portion (114) is secured downstream on suspension means (118) of the turbojet engine (5) to a pylon (116).

10. The nacelle (101) according to any one of claims 8 and 9, **characterized in that** said fixed fairing portion (114) has a shape such that in the working position, it fits substantially in the outer contour of the inner structure.

11. The nacelle (1, 101) according to any one of claims 7 to 10, **characterized in that** the guide (13, 141) is intended to be secured on the downstream portion of the turbojet engine (5), while the corresponding rail (12, 140) is attached to the inner structure (9), or vice versa.

12. The nacelle (1, 101) according to any one of claims 8 or 10, **characterized in that** the fixed fairing portion (114) has at least one side rail, or a guide, capable of cooperating with a complementary guide or rail of the inner structure (9).

13. A propulsion assembly for an aircraft, **characterized in that** it comprises a dual-flow turbojet engine (5) housed in a nacelle (1, 101) according to claim 7, said turbojet engine having a downstream portion comprising at least one guide (12, 140) or a rail (13, 141) capable of cooperating with a rail or guide secured to the inner structure of the nacelle.

14. The propulsion assembly according to claims 13, **characterized in that** the guide (12, 140) or the rail (13, 141) intended to be secured on the downstream portion of the turbojet engine (5) has at least one curved upstream section making it possible to move the inner structure (9) radially further away or closer along with the downstream portion of the turbojet engine, and a substantially straight downstream section, preferably substantially parallel to a plane of symmetry of the nacelle (1,101).

15. The propulsion assembly according to claim 14, **characterized in that** the upstream section for moving radially further away or closer has a parabolic shape.

## Patentansprüche

1. Gondel (1, 101) für Turbotriebwerk (5) der Bauart, die einen oberstromigen Lufteintritt, ein mittleres Segment, das dazu bestimmt ist, ein Gebläse des Turbotriebwerks zu umgeben, und einen unterstromige Struktur, die dazu bestimmt ist, die Verbrennungskammer des Turbotriebwerks zu umgeben, aufweist, wobei das oberstromige Segment eine externe Struktur (6) umfasst, die mit einer konzentrischen internen Struktur (9), die dazu bestimmt ist, einen unterstromigen Abschnitt des Turbotriebwerks zu umgeben, der die Verbrennungskammer des Turbotriebwerks umfasst, einen ringförmigen Abzugskanal (8) bildet, **dadurch gekennzeichnet, dass** mindestens ein Abschnitt (10a, 10b, 110) der internen Struktur entlang einer Längsachse der Gondel derart vorschiebbar beweglich montiert ist, dass er zwischen einer oberstromigen Arbeitsstellung und einer Wartungsstellung, bei der der Abschnitt der internen Struktur unterstromig verschoben ist, bewegbar ist, um den unterstromigen Abschnitt, der die Verbrennungskammer des Turbotriebwerks umfasst, aufzudecken.

2. Gondel (1) nach Anspruch 1, **dadurch gekennzeichnet, dass** die interne Struktur (9) in Form von mindestens zwei Halbabschnitten (10a, 10b) realisiert ist.

3. Gondel (1) nach Anspruch 2, **dadurch gekennzeichnet, dass** sich die Halbabschnitte (10a, 10b) auf der einen und der anderen Seite einer Längssymmetrieebene der Gondel befinden.

4. Gondel (1) nach einem der Ansprüche 1 bis 3, **dadurch gekennzeichnet, dass** jede interne Struktur (9) mindestens eine Verriegelungsvorrichtung in Arbeitsstellung aufweist.

5. Gondel (1) nach Anspruch 4, **dadurch gekennzeichnet, dass** die Verriegelungsvorrichtung durch Einsatz eines flexiblen Betätigungskabels, das von unterstromig nach oberstromig der Halbschale (10a, 10b) angeordnet ist, aktivierbar ist.

6. Gondel (1) nach einem der Ansprüche 1 bis 5, **dadurch gekennzeichnet, dass** die externe Struktur (6) imstande ist, sich durch Verschieben zu öffnen, wobei die interne Struktur (9) mit der externen Struktur zumindest über eine Treibstange verbunden ist.

7. Gondel (1, 101) nach einem der Ansprüche 1 bis 6, **dadurch gekennzeichnet, dass** die interne Struktur (9) imstande ist, sich mit mindestens einem Schiene/Gleitführung-System (12,13,140,141) durch Verschieben im Verhältnis zur Gondel zu bewegen.

8. Gondel (101) nach einem der Ansprüche 1 bis 7, **dadurch gekennzeichnet, dass** die interne Struktur (9) mindestens einen festen Verkleidungsabschnitt (114) aufweist, der oberstromig am Turbotriebwerk (5) befestigt ist.

9. Gondel (101) nach Anspruch 8, **dadurch gekennzeichnet, dass** der feste Verkleidungsabschnitt (114) unterstromig auf Aufhängungsmitteln (118) des Turbotriebwerks (5) an einem Stiel (116) befestigt ist.

10. Gondel (101) nach einem der Ansprüche 8 und 9, **dadurch gekennzeichnet, dass** der feste Verkleidungsabschnitt (114) eine Form aufweist, die derart ist, dass sie sich in Arbeitsstellung etwa in die äußere Kontur der internen Struktur einfügt.

11. Gondel (1, 101) nach einem der Ansprüche 7 bis 10, **dadurch gekennzeichnet, dass** die Gleitführung (13, 141) dazu bestimmt ist, auf dem unterstromigen Abschnitt des Turbotriebwerks befestigt zu sein, wogegen die entsprechende Schiene (12, 140) mit der internen Struktur (9) verbunden ist, oder umgekehrt.

12. Gondel (1, 101) nach einem der Ansprüche 8 oder 10, **dadurch gekennzeichnet, dass** der feste Verkleidungsabschnitt (114) mindestens eine seitliche Schiene oder eine Gleitführung aufweist, die imstande sind, mit einer komplementären Gleitführung oder einer komplementären Schiene der internen Struktur (9) zusammenzuarbeiten.

13. Antriebsgruppe für ein Luftfahrzeug, **dadurch gekennzeichnet, dass** sie ein Turbofantriebwerk (5) umfasst, das in einer Gondel (1, 101) nach Anspruch 7 untergebracht ist, wobei das Turbotriebwerk einen oberstromigen Abschnitt aufweist, der mindestens eine Gleitführung (12, 140) oder eine Schiene (13, 14) umfasst, die imstande sind, mit einer Schiene oder einer Gleitführung zusammenzuarbeiten, die mit einer internen Struktur der Gondel verbunden sind.

14. Antriebsgruppe nach Anspruch 13, **dadurch gekennzeichnet, dass** die Gleitführung (12, 140) oder die Schiene (13, 141), die dazu bestimmt ist, auf dem unterstromigen Abschnitt des Turbotriebwerks (5) befestigt zu sein, mindestens ein gekrümmtes oberstromiges Teilstück aufweist, das imstande ist, eine radiale Entfernung oder Annäherung der internen Struktur (9) durch Verschiebung entlang des unterstromigen Abschnitts des Turbotriebwerks zu erlauben, und ein etwa gerades unterstromiges Teilstück vorzugsweise etwa parallel zu einer Symmetrieebene der Gondel (1, 101).

15. Antriebsgruppe nach Anspruch 14, **dadurch gekennzeichnet, dass** das oberstromige Teilstück radialer Entfernung oder Annäherung eine Parabolform hat.
